# EUROPEAN PATENT SPECIFICATION

(11) **EP 2 632 707 B1**
(45) Date of publication and mention of the grant of the patent: **10.04.2019**
(21) Application number: 10770822.4
(22) Date of filing: 26.10.2010
(51) Int. Cl.: B32B 3/12, E04C 2/20

(54) **MULTILAYERED CARBONATE SHEETS**
MEHRSCHICHTIGE CARBONATFOLIEN
FEUILLES DE CARBONATE MULTICOUCHES

(43) Date of publication of application: 04.09.2013
(73) Proprietor: Trinseo Europe GmbH, 8810 Horgen (CH)
(72) Inventor: VREYS, Mark, B-9041 Oostakker (BE)
(74) Representative: Hoffmann Eitle
(86) International application number: PCT/EP2010/066171
(87) International publication number: WO 2012/055429

(56) References cited:
- WO-A1-03/095521
- WO-A1-2009/063403
- US-A- 5 856 012
- US-A1- 2004 266 975

## Description

This invention relates to light transmissive panels in general and, in particular, to a multilayer thermoplastic carbonate sheet or a multilayer thermoplastic carbonate film with improved thermal insulation.

### BACKGROUND OF THE INVENTION

With an increased awareness of energy use and sustainability, it is important to limit heat loss for transparent panels and sheets in in building and construction applications. In this regard, it is desirable to increase the thermal insulation for these panels or sheets and trend is to provide such panels and sheets with a U value smaller or equal to 1 W/m²K. (U=1/R, where R is the thermal resistance, R = R(radiation) + R(conduction) + R(convection)).

Another important problem concerns the resistance of the transparent structures to the weather. The mechanical characteristics of the transparent structures must be able to withstand the weather in all conditions. Thus, it would be desirable to provide a panel for use as transparent structures having increased light transmission with a combination of good insulating properties, improved durability, and reduced maintenance requirements.

One suggestion to these problems is polycarbonate multi-walled sheet structures. The typical multi-walled sheet structures have about 3 to 5 layers, e.g., a triple wall sheet. A triple wall sheet has two external walls and one internal wall. Each external wall has an exterior surface and an interior surface. For a multi-walled sheet with three or more walls, the interior wall's surfaces are generally designated as the interior upper surface or interior lower surface. Typically a series of ribs are provided along the length of the sheet structures to separate the layers, provide stability, and create an insulation layer between the walls. While the insulating effectiveness of such a structure may be acceptable, providing additional walls and thus greater insulation would be desirable. A limiting factor to the creation of sheets having more walls or layers, i.e., seven, eight or more is the processing of the material used to create the multi-walled sheets through the extruder and die. Thus, known plastic resins used to create three to five to seven layer multi-walled sheets will if they are used in an attempt to create a multi-walled sheet having seven eight or more walls, result in sagging of the sheet geometry and very low line speed.

WO-A-2009/063403 discloses a multi-walled sheet comprising main layers and transverse walls. The sheet has a total thickness of 45 mm or more and/or a weight of at least 4.5 kg/m². The sheet is formed from greater than 75 wt.% of branched polycarbonate resin.

US-A-2004/0266975 and WO-A-03/095521 discloses production of thermoplastic sheets by extruding a composition comprising a melt of a branched polycarbonate resin.

### SUMMARY

According to a first aspect, the present invention provides an extruded thermoplastic aromatic polycarbonate and/or aromatic polyester carbonate multi-walled sheet structure comprising:
a. at least two generally parallel spaced apart walls; and
b. a plurality of ribs extending the length of the sheet in a direction of extrusion and separating adjacent walls;
wherein the sheet has a total thickness greater than 40 mm and the polycarbonate has:
(i) a melt viscosity ratio greater than 4.5 measured at 260°C, wherein the melt viscosity ratio is a ratio of the viscosity at a shear rate of 0.1 s⁻¹ to the viscosity at a shear rate of 100 s⁻¹;
(ii) a mean weight average molecular weight of from 35,000 to 40,000 as measured using gel permeation chromatography; and
(iii) a branching agent content of from 0.6 to 0.7 wt.%.

According to a second aspect, the present invention provides a method of making a multi-walled structure comprising:
(a) preparing a thermoplastic aromatic polycarbonate and/or aromatic polyester carbonate having:
   (i) a melt viscosity ratio greater than 4.5 measured at 260°C, wherein the melt viscosity ratio is a ratio of the viscosity at a shear rate of 0.1 s⁻¹ to the viscosity at a shear rate of 100 s⁻¹;
   (ii) a mean weight average molecular weight of from 35,000 to 40,000 as measured using gel permeation chromatography; and
   (iii) a branching agent content of from 0.6 to 0.7 wt.%; and
(b) extruding the polycarbonate using a die whose temperature is in the range 245-300°C and a line speed greater than 0.8 mm/min to form a sheet having at least two generally parallel spaced apart walls separated from one another by ribs extending the length of the sheet in the direction of extrusion.

In one embodiment, the present invention includes an extruded aromatic polycarbonate and/or aromatic polyester carbonate thermoplastic multi-walled sheet structure formed from a thermoplastic polymer and includes at least two generally parallel walls. Each wall has a first and a second surface and is separated apart from one another by ribs extending the length of the sheet in the direction of extrusion. In another embodiment, the multi-walled sheet structure includes at least seven, eight, nine, or more generally parallel walls, horizontal or under a certain angle, sometimes ten, and other times, ten or more walls. Each wall has a first and a second surface separated apart from one another by ribs extending the length of the sheet in the direction of extrusion.

The sheet structure of the present invention may include one or more of a UV absorber, a near infrared absorption ("NIR") absorber, a thermal stabilizer, a colorant, a dye, a processing aid, a lubricant, a filler or a reinforcing aid.

In another embodiment, the sheet structure of the present invention can also include a laminated or a coextruded layer of one or more thermoplastic or thermoset resins to provide abrasion/scratch resistance, chemical resistance, ultra violet (UV) radiation resistance, NIR, light scattering reduction, light reflection reduction, dirt accumulation reduction, condensation reduction, antimicrobial, protection from discoloration, protection from haze formation or protection from cracking.

### BRIEF DESCRIPTION OF THE DRAWINGS

FIG. 1 shows a cross-sectional view along the direction of extrusion of a multi-layer sheet structure according to one embodiment of the present invention.
FIGS. 2A through 2E show a cross-section of exemplary rib structures that can be used to separate adjacent walls of the multi-layer sheet structure according to the present invention.
FIG. 3 shows the results of the measurement of the viscosity versus the shear rate of a polycarbonate suitable for use in the embodiments of the present invention compared to known polycarbonates. The log of the viscosity is plotted versus the log of the shear rate.

### DETAILED DESCRIPTION OF THE EMBODIMENTS

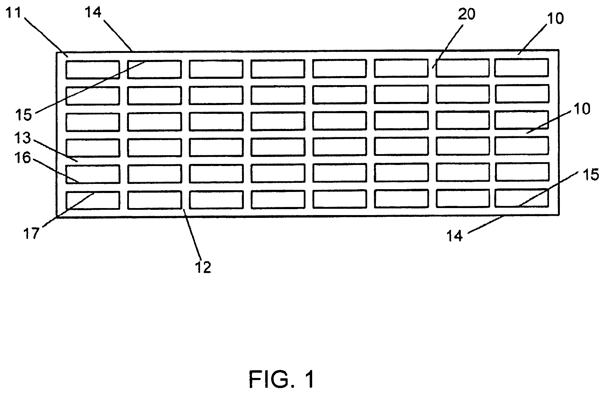

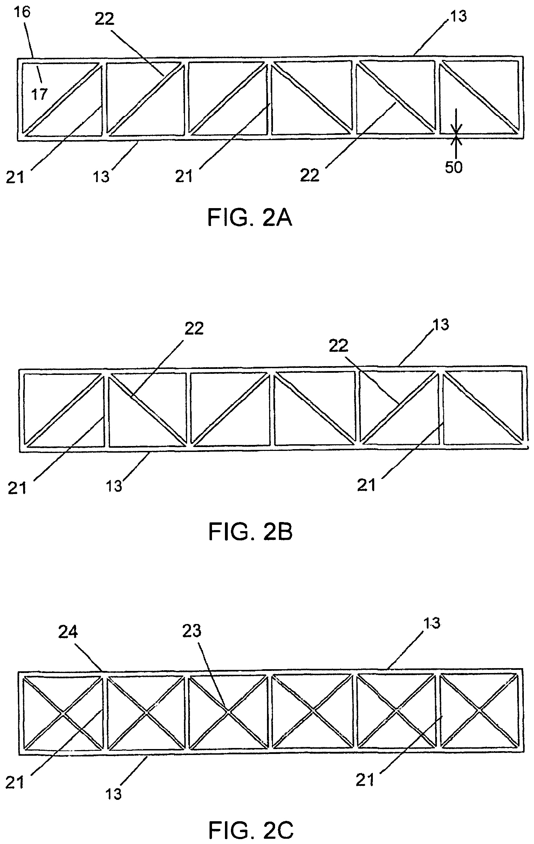

When a multi-wall sheet is viewed in cross-section (cut across or perpendicular to the plane of extrusion as shown in FIG. 1) with the sheet flat and having the longest dimensions (length and width) in the horizontal plane, there are two or more generally parallel, horizontal walls, also referred to as "layers" or "faces" 10 and a series of ribs 20 that run between the layers along the length direction and separate the layers. These ribs 20 are also sometimes referred to as "webs" or "slats". While the ribs 20 are shown as vertical or perpendicular to the layers 10, FIGS. 2A to 2E show several non-limiting alternative rib structures that may be perpendicular 21, diagonal 22 or combinations of perpendicular and diagonal between and separating the parallel faces 10. While it is contemplated that each of the illustrated rib designs can be used in combination with each other, for simplicity of manufacturing, it is desired to use a single rib structure throughout the multi-layer structure.

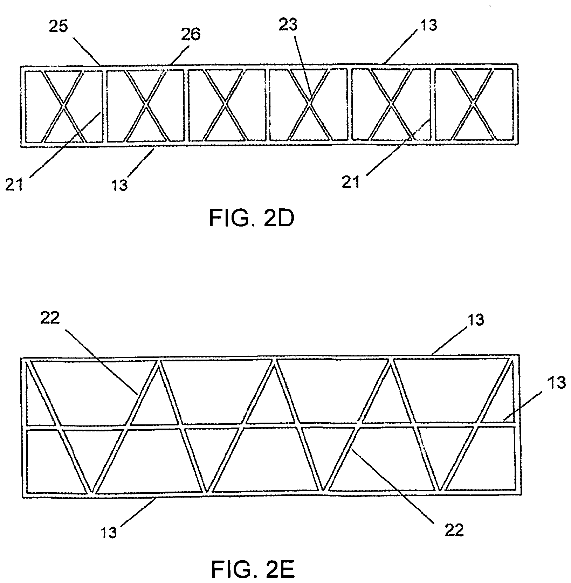

Figures 2A to 2D show two layers 10 of the multi-layer sheet structure of Figure 1 with each illustrating alternative rib designs. Figure 2E shows three layers of the multi-layer sheet structure of Figure 1. As illustrated in FIGS 1 and 2, the multi-layer sheet has generally flat walls shown as first or upper wall 11 and second or lower wall 12 that are generally parallel to each other. Sheet structures that have at least two or more layers, generally with smooth surfaces, are collectively referred to as "multi-walled" sheets. For example in the case of multi-layer sheets such as the seven layer sheet shown in FIG. 1, there are two external walls (11 and 12) and five internal wall 13. Each external wall as an exterior surface 14 and an interior surface 15. For multi-walled sheet with three or more walls, the interior wall's surfaces are designated as the interior upper surface 16 or interior lower surface 17.

While the external and internal walls have been depicted as being generally flat, it is contemplated that they may have other shapes such as a corrugated shaped wall structure. The term corrugated means having alternating ridges and grooves. The corrugation is in the direction of extrusion and is sometimes referred to as the machine direction or the length of the extruded sheet. The multi-layer sheet structure of the present invention may include both external walls with a corrugated shape.

The thickness 50 of the wall is defined as the distance from a first surface of a wall to a second surface of the wall. For example, as depicted in FIG 2a, the thickness 50 of one of the internal walls 13 is the distance between the interior upper surface 16 and the interior lower surface 17. The wall thickness of the walls of a multi-walled sheet of the present invention independently is equal to or greater than 0.1 mm, in some cases, equal to or greater than 0.3 mm, and in other cases, equal to or greater than 0.5 mm. The wall thickness of the walls of a multi-walled sheet of the present invention independently is equal to or less than 10 mm, in some cases, equal to or less than 5 mm, and in other cases, equal to or less than 1 mm.

The rib thickness of a multi-walled sheet of the present invention is equal to or greater than about 0.1 mm, in some cases, equal to or greater than 0.3 mm, and in other cases, equal to or greater than 0.5 mm. The rib thickness of a multi-walled sheet of the present invention is equal to or less than 8 mm, in some cases equal to or less than 4 mm, and in other cases equal to or less than 0.8 mm.

The desired overall sheet thickness, the number of walls (that is, layers or faces) and the spacing between walls or layers (for example, height of perpendicular ribs) can be selected accordingly to provide desired sheet performance properties. Embodiments of the present invention include at least two spaced apart walls, in some cases, at least five walls, in other cases, at least seven walls, and in still other cases at least ten walls. When more than three layers are used, the interior walls may be located an equal distance from each other and from the upper and lower layers (i.e., one of more are centered with respect to the exterior walls) or closer to one layer or another.

A multi-walled sheet of the present invention has a total thickness that is defined as the distance from the exterior surface 14 of the upper wall 11 to the exterior surface 14 of the lower wall 12. The multi-layer sheet structure of the present invention has total thickness equal to or greater than 30 mm, in some cases, equal to or greater than 40 mm, and in other cases, equal to or greater than 50 mm. A multi-layer sheet structure of the present invention has a total thickness equal to or less than 100 mm, in some cases equal to or less than 80 mm, and in other cases equal to or less than 60 mm.

The number and design of the ribs may depend on the structural requirements of the sheet. As noted above and depicted in the figures, the ribs may be vertical 21 (that is, perpendicular the sheet walls), diagonal 22 (including crossing diagonals 23), or combinations thereof. When vertical and diagonal ribs are both employed, the diagonal ribs may intersect the wall(s) at the same point that where the vertical ribs intersect 24 or at different points 25 and 26. When vertical ribs 21 are provided they are spaced from each other a distance equal to or greater than 10 mm, in some cases, equal to or greater than 15 mm, and in other cases, equal to or greater than 20 mm. The rib spacing of vertical ribs is equal to or less than 30 mm, in some cases, equal to or less than 40 mm, and in other cases equal to or less than 50 mm.

The multi-layer sheets will generally have an area weight equal to or greater than 3.5 kg/m², in some cases equal to or greater than 4 kg/m², and in other cases equal to or greater than 5 kg/m². The area weight of suitable multi-layer sheets is equal to or less than 8 kg/m², in some cases equal to or less than 7 kg/m², and in other cases equal to or less than 6 kg/m².

As recognized by the skilled practitioner, depending upon the need for rigidity, thermal insulation, light transmission, and weathering resistance, the structures of the present invention can be prepared from a broad range of plastic resins. In some embodiments, the multi-walled sheet of the present invention is prepared from one of the known rigid thermoplastic resins including polycarbonate (PC) and optionally one or more of polypropylene (PP), polystyrene (PS), polystyrene-acrylonitrile copolymer (SAN), butadiene modified SAN (ASS), poly(methyl-methacrylate) (PMMA), poly(ethylene-terephthalate) (PET), glycol-modified PET (PETG) and polyvinyl chloride (PVC). In certain embodiments, the sheet structures are prepared from PC and optionally one or more of PET, PETG and PMMA and in some cases the structure is prepared from PC.

The carbonate polymer of the present invention is a thermoplastic aromatic polycarbonate and/or aromatic polyester carbonate. Suitable aromatic polycarbonates and/or aromatic polyester carbonates according to the invention are known from the literature or can be produced by methods known from the literature (for example, for the production of aromatic polycarbonates, see Schnell, "Chemistry and Physics of Polycarbonates", Interscience Publishers, 1964, as well as USP 3,028,365; 4,529,791; and 4,677,162. Suitable aromatic polyester carbonates are described in USP 3,169,121; 4,156,069 and 4,260,731.

The production of aromatic polycarbonates is effected, for example, by the reaction of diphenols with carbonic acid halides such as phosgene, and/or with aromatic dicarboxylic acid dihalides, suitably benzenedicarboxylic acid dihalides, by the phase boundary method, optionally with the use of chain terminators, e.g., monophenols, and optionally with the use of trifunctional branching agents or branching agents with a functionality higher than three, for example triphenols or tetraphenols.

Diphenols for the production of the aromatic polycarbonates and/or aromatic polyester carbonates may be those of formula II 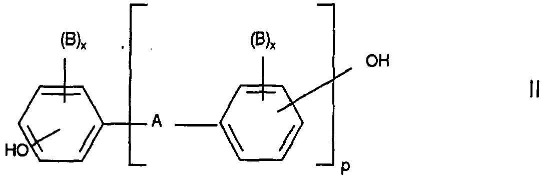 wherein A denotes a single bond, a C₁ - C₅ alkylene, a C₂ - C₅ alkylidene, a C₅ - C₆ cycloalkylidene, -O-, -SO-, -CO-, -S-, -SO₂-, or a C₆ - C₁₂ arylene, on to which other aromatic rings, which optionally contain hetero atoms, can be condensed, or a radical of formula III or IV 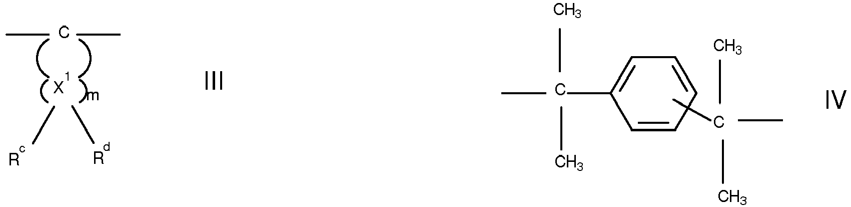
B in each case is independently hydrogen, a C₁ - C₁₂ alkyl, suitably methyl, or a halogen, such as chlorine and/or bromine;
x in each case is mutually independently 0, 1, or 2;
p is 0 or 1;
R^{c} and R^{d} are mutually independent of each other and are individually selectable for each X¹ and are hydrogen or a C₁ - C₆alkyl, suitably hydrogen, methyl or ethyl;
X¹ denotes carbon; and
m denotes an integer from 4 to 7, in some cases 4 or 5, with the proviso that R^{c} and R^{d} simultaneously denote an alkyl on at least one X₁ atom.

Suitable diphenols are hydroquinone, resorcinol, dihydroxybiphenyls, bis(hydroxyphenyl)-C₁ - C₅ alkanes, bis(hydroxyphenyl)-C₅ -C₆ cycloalkanes, bis(hydroxyphenyl)ethers, bis(hydroxyphenyl)sulfoxides, bis(hydroxyphenyl)ketones, bis(hydroxyphenyl)sulfones and alpha, alpha'-bis(hydroxyphenyl)diisopropylbenzenes, as well as derivatives thereof which have brominated and/or chlorinated nuclei.

Desirable diphenols include 4,4'-dihydroxybiphenyl, bisphenol A, 2,4-bis(4-hydroxyphenyl)-2-methylbutane, 1,1-bis(4-hydroxyphenyl)-cyclohexane, 1,1-bis(4-hydroxyphenyl)-3,3,5-trimethylcyclohexane, 4,4-dihydroxydiphenyl sulfide and 4,4-dihydroxydiphenyl sulfone, as well as di- and tetrabrominated or chlorinated derivatives thereof, such as 2,2-bis(3-chloro-4-hydroxyphenyl)propane, 2,2-bis-(3,5-dichloro-4-hydroxyphenyl)propane or 2,2-bis(3,5-dibromo-4-hydroxyphenyl)propane. 2,2-bis-(4-hydroxyphenyl)propane (bisphenol A) is an example of a suitable diphenol. The diphenols can be used individually or as arbitrary mixtures. The diphenols are known from the literature or can be obtained by methods known from the literature.

Examples of suitable chain terminators for the production of the aromatic polycarbonates include phenol, p-chlorophenol, p-tert-butylphenol or 2,4,6-tribromophenol, as well as long chain alkylphenols such as 4-(1,3-dimethyl-butyl)-phenol or monoalkylphenols or dialkylphenols which contain a total of 8 to 20 C atoms in their alkyl substituents, such as 3,5-di-tert-butyl-phenol, p-iso-octylphenol, p-tert- octylphenol, p-dodecylphenol, 2-(3,5-dimethylheptyl)-phenol and 4-(3,5-dimethylheptyl)- phenol. The amount of chain terminators used is generally between 0.1 mole percent and 10 mole percent with respect to the molar sum of the diphenols used in each case.

The aromatic polycarbonates and/or aromatic polyester carbonates of the present invention may have a mean weight average molecular weights of from 35,000 to 40,000. Unless otherwise indicated, the references to aromatic polycarbonate and/or aromatic polyester carbonate "molecular weight" herein refer to weight average molecular weights (M_{w}) determined by gel permeation chromatography (GPC) using laser scattering techniques with a bisphenol A polycarbonate standard and is given in units of grams per mole (g/mole).

The aromatic polycarbonates can be branched by incorporating suitable branching agents. Branched polycarbonates suitable for the present invention can be prepared by known techniques, for example several suitable methods are disclosed in USP 3,028,365; 4,529,791 and 4,677,162.

Suitable branching agents that may be used are tri- or multi-functional carboxylic acid chlorides, such as trimesic acid trichloride, cyanuric acid trichloride, 3,3'-,4,4'-benzophenonetetracarboxylic acid tetrachloride, 1,4,5,8-naphthalenetetracarboxylic acid tetrachloride or pyromellitic acid tetrachloride for example, in amounts of 0.01 to 1.0 mole percent (with respect to the dicarboxylic acid dichlorides used) or tri- or multi-functional phenols such as phloroglucinol, 4,6-dimethyl-2,4,6-tris(4-hydroxyphenyl)-2-heptene, 4,4-dimethyl-2,4,6-tris(4-hydroxyphenyl)heptane, 1,3,5- tris(4-hydroxyphenyl)benzene, 1,1,1-tris(4-hydroxyphenyl)ethane ("THPE"), tris(4-hydroxyphenyl)-phenyl-methane, 2,2-bis[4,4-bis(4-hydroxyphenyl)cyclohexyl]-propane, 2,4-bis[1-(4-hydroxyphenyl)-1-methylethyl]phenol, tetrakis(4-hydroxyphenyl)-methane, 2,6-bis(2-hydroxy-5-methyl-benzyl)-4-methyl-phenol, 2-(4-hydroxyphenyl)-2-(2,4-dihydroxyphenyl)propane, or tetrakis(4-[1-(4-hydroxyphenyl)-1-methylethyl]-phenoxy)-methane. A suitable branching agent is THPE.

The branching agents can be placed in the reaction vessel with the diphenols. Acid chloride branching agents can be introduced together with the acid chlorides.

The branching agents may be incorporated in amounts from 0.6 wt% to 0.7 wt%, for example 0.64 wt %.

Both homopolycarbonates and copolycarbonates are suitable. For the production of copolycarbonates according to component (i) in accordance with the invention, 1 to 25 parts by weight, suitably 2.5 to 25 parts by weight (with respect to the total amount of diphenols to be used) of polydiorganosiloxanes comprising hydroxy-aryloxy terminal groups can also be used. These are known (see, for example, USP 3,419,634) or can be produced by methods known from the literature.

Apart from bisphenol A homopolycarbonates, other polycarbonates include the copolycarbonates of bisphenol A with up to 15 mole percent, with respect to the molar sums of the diphenols, of other diphenols which are cited as preferred or particularly preferred, in particular 2,2-bis(3,5-dibromo-4-hydroxyphenyl)-propane.

Aromatic dicarboxylic acid dihalides suitable for the production of the aromatic polyester carbonates are the diacid dichlorides of isophthalic acid, terephthalic acid, diphenyl ether-4,4'-dicarboxylic acid and naphthalene-2,6-dicarboxylic acid. Mixtures of the diacid dichlorides of isophthalic acid and terephthalic in a ratio between 1:20 and 20:1 are exemplary. A carbonic acid halide, such as phosgene, is used in conjunction as a difunctional acid derivative during the production of the polyester carbonates.

Apart from the aforementioned monophenols, suitable chain terminators for the production of the aromatic polyester carbonates include chlorocarboxylic acid esters thereof, as well as the acid chlorides of aromatic monocarboxylic acids which may optionally be substituted by C₁ - C₂₂ alkyl groups, or by halogen atoms, and also include aliphatic C₂ - C₂₂ monocarboxylic acid chlorides. The amount of chain terminator is 0.1 to 10 mole percent in each case, with respect to the moles of diphenols in the case of phenolic chain terminators and with respect to the moles of dicarboxylic acid dichlorides in the case of monocarboxylic acid chloride chain terminators.

The aromatic polyester carbonates may also contain incorporated hydroxycarboxylic acids. The aromatic polyester carbonates may be either linear or may be branched. Suitable branching agents are disclosed hereinabove.

The proportion of carbonate structural units in the aromatic polyester carbonates can be arbitrarily varied. The content of carbonate groups may be up to 100 mole percent, particularly up to 80 mole percent, and in some cases up to 50 mole percent, with respect to the sum of ester groups and carbonate groups. Both the ester and the carbonate fraction of the aromatic polyester carbonates can be present in the form of blocks, or can be randomly distributed in the condensation polymer.

The aromatic polycarbonates and aromatic polyester carbonates can be used individually or in any mixture with each other.

The structures according to the invention can also contain or have laminated or coextruded thereto further layers of other thermoplastic or thermoset resins to provide desired performance results, particularly where it is desired to modify the surface(s) of the sheet structure in some fashion, such as for abrasion/scratch resistance, chemical resistance, ultra violet (UV) radiation resistance, near infrared (NIR) absorption, light scattering reduction, light reflection reduction, dirt accumulation reduction, condensation reduction, antimicrobial, protection from discoloration, protection from haze formation, protection from cracking, or the like. The thermoplastic resin may contain the normal type of additives used for their known purposes for these types of resins and structures, including, but not limited to stabilizers such as UV absorbers, NIR absorbers or thermal stabilizers, colorants such as dyes, processing aids such as lubricants, fillers, reinforcing aids, optical brighteners, fluorescent additives, and the like. Such additives can be added to the resins that are used to prepare these structures and/or any layers that may be laminated or coextruded thereto for their known purpose.

In suitable embodiments of the present invention the polycarbonate has a melt viscosity measured at a temperature of 260 °C at a shear rate of 0.1 s⁻¹ equal to or greater than 10,000 Pa·s, in some cases greater than 12,000 Pa·s, in other cases, greater than 14,000 Pa·s, and in other cases greater than 16,000 Pa·s.

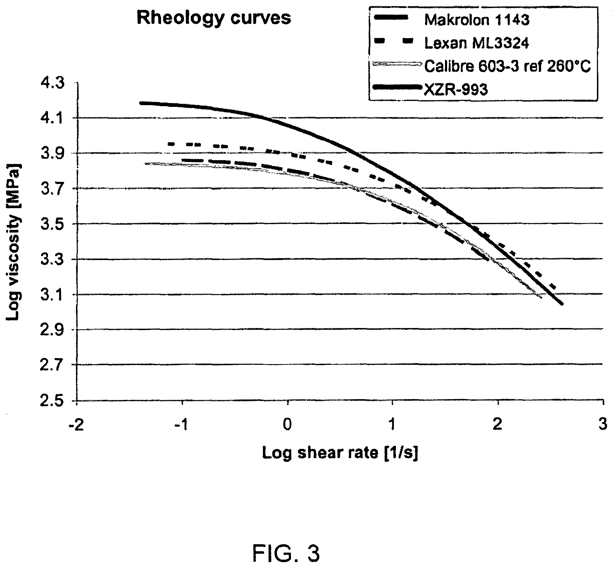

To achieve an appropriate balance between suitable flow processing considerations and desired structural strength when the resin exits extruder, the inventor has found that suitable polycarbonates useful in the present invention have a defined melt viscosity ratio. The term melt viscosity ratio as used in this specification, drawings and claims refers to the ratio of the viscosity at a shear rate of 0.1 s⁻¹ to the viscosity at a shear rate of 100 s⁻¹ measured at 260°C. When graphically depicted (as in Fig. 3) it is often useful to use the log of the shear rate and log of the viscosity. According to the present invention, the melt viscosity ratio is equal to or greater than 4.5. In some cases, the melt viscosity ratio is equal to or greater than 5, in other cases, the melt viscosity ratio is equal to or greater than 5.5, in other cases, the melt viscosity ratio is equal to or greater than 6, in still other cases, the melt viscosity ratio is equal to or greater than 6.5.

### IR Absorbing Additive

Suitable IR absorbers to improve the heat shielding properties of the multilayered article of the present invention are, a metal boride, cesium tungsten oxide, antimony doped tin oxide particles, zinc oxide particles containing at least one element selected from In, Ga, Al, and Sb, tin doped indium oxide particles, other organic or inorganic IR absorbers such as phthalocyanine-based compositions, naphthalocyanine-based compositions, copper sulfide, or copper ion compounds which may be blended into the carbonate compositions of the present invention.

The inorganic IR absorbing additives are generally fine particles of a metal boride, particularly a boride such as lanthanum boride (LaB₆), praseodymium boride (PrB₆), neodymium boride (NdB₆), cerium boride (CeB₆), gadolinium boride (GdB₆), terbium boride (TbB₆), dysprosium boride (DyB₆), holmium boride (HoB₆), yttrium boride (YB₆), samarium boride (SmB₆), europium boride (EuB₆), erbium boride (ErB₆), thulium boride (TmB₆), ytterbium boride (YbB₆), lutetium boride (LuB₆), strontium boride (SrB₆), calcium boride (CaB₆), titanium boride (TiB₂), zirconium boride (ZrB₂), hafnium boride (HfB₂), vanadium boride (VB₂), tantalum boride (TaB₂), a chromium borides (CrB and CrB₂), a molybdenum borides (MoB₂, Mo₂B₅ and MoB), tungsten boride (W₂B₅), or the like, or combinations comprising at least one of the foregoing borides.

It is desirable for the inorganic IR absorbing additives to be in the form of nanosized particles prior to the dispersion into the thermoplastic and/or thermosetting polymer. There is no particular limitation to the shape of the particles, which may be for example, spherical, irregular, plate-like or whisker like. The nanosized particles may generally have average largest dimensions of less than or equal to about 200 nanometers (nm). In one embodiment, the particles may have average largest dimensions of less than or equal to 150 nm. In another embodiment, the particles may have average largest dimensions of less than or equal to 100 nm. In yet another embodiment, the particles may have average largest dimensions of less than or equal to 75 nm. In yet another embodiment, the particles may have average largest dimensions of less than or equal to 50 nm. As stated above, the nanosized particles may generally have average largest dimensions of less than or equal to 200 nm. In one embodiment, more than 90 percent of the particles have average largest dimensions less than or equal to 200 nm. In another embodiment, more than 95 percent of the particles have average largest dimensions less than or equal to 200 nm. In yet another embodiment, more than 99 percent of the particles have average largest dimensions less than or equal to 200 nm. Bimodal or higher particle size distributions may be used.

The inorganic IR absorbing additives are generally used in amounts of 1.2·10⁻⁶ gram/square meter (g/m²) to 2.0 g/m². In one embodiment, the inorganic IR absorbing additive may be used in amounts of 6·10⁻⁶ to 1.0 g/m². In another embodiment, the inorganic IR absorbing additive may be used in amounts of 0.09 to 0.36 g/m². In yet another embodiment, the inorganic IR absorbing additive may be used in amounts of 0.18 to 0.9 g/m².

The inorganic IR absorbing additives are generally used in amounts of equal to or less than 3000 ppm, in some cases equal to or less than 2000 ppm, in some cases equal to or less than 1500 ppm, in some cases equal to or less than 1250 ppm, in some cases equal to or less than 1000 ppm, in some cases equal to or less than 750 ppm, and in other cases equal to or less than 500 ppm weight percent based on the total weight of the carbonate polymer composition for a specific layer. The inorganic IR absorbing additives are generally used in amounts of equal to or greater than 0.02 ppm, in some cases equal to or greater than 1 ppm, in some cases equal to or greater than 1.5 ppm, and in other cases equal to or greater than 2.5 ppm based on the total weight of the carbonate polymer composition for a specific layer.

### UV Absorbing Additive

The composition can further comprise one or more UV absorbing additive. Suitable UV absorbing additives are cyanoacrylate compounds, triazine compounds, benzophenone compounds such as 2,4 dihydroxybenzophenone, 2-hydroxy-4-methoxybenzophenone, 2-hydroxy-4-n-octoxybenzophenone, 4-dodecyloxy-2 hydroxybenzophenone, 2-hydroxy-4-octadecyloxybenzophenone, 2,2' dihydroxy-4 methoxybenzophenone, 2,2' dihydroxy-4,4'dimethoxybenzophenone, 2,2' dihydroxy-4 methoxybenzophenone, 2,2', 4,4' tetra hydroxybenzophenone, 2-hydroxy-4-methoxy-5 sulfobenzophenone, 2-hydroxy-4-methoxy-2'-carboxybenzophenone, 2,2'dihydroxy-4,4'dimethoxy-5 sulfobenzophenone, 2-hydroxy-4-(2-hydroxy-3-methylaryloxy) propoxybenzophenone, 2-hydroxy-4 chlorobenzopheone, or the like; benzotriazole compounds such as 2-(2-hydroxy-5-tert-octylphenyl)-benzotriazole, 2-hydroxy-4-n-octoxy benzophenone 2-(2-hydroxy-5-methyl phenyl) benzotriazole, 2-(2-hydroxy-3',5'-di-tert-butyl phenyl) benzotriazole, and 2-(2-hydroxy-X-tert, butyl-5'-methyl-phenyl) benzotriazole, or the like; salicylate compounds such as phenyl salicylate, carboxyphenyl salicylate, p-octylphenyl salicylate, strontium salicylate, p-tert butylphenyl salicylate, methyl salicylate, dodecyl salicylate, or the like; and also other ultraviolet absorbents such as resorcinol monobenzoate, 2 ethyl hexyl-2-cyano, 3-phenylcinnamate, 2-ethyl-hexyl-2-cyano-3,3-diphenyl acrylate, ethyl-2-cyano-3,3-diphenyl acrylate, 2-2'-thiobis(4-t-octylphenolate)-1-n-butylamine, or the like, or combinations comprising at least one of the foregoing UV absorbing additives. Commercially available UV absorbing additives are TINUVINTM 234, TINUVIN 329, TINUVIN 350 and TINUVIN 360, commercially available from Ciba Specialty Chemicals; CYASORBTM UV absorbing additives, available from Cytec Industries, such as 2-(2H-benzotriazol-2-yl)-4-(1,1,3,3-tetramethylbutyl)-phenol (CYASORB 5411); 2-hydroxy-4-n-octyloxybenzophenone (CYASORB 531); 2-[4,6-bis(2,4-dimethylphenyl)-1,3,5-triazin-2-yl]-5-(octyloxy)-phenol (CYASORB 1164); 2,2'-(1,4-phenylene)bis(4H-3,1-benzoxazin-4-one) (CYASORB UV-3638); 1,3-bis[(2-cyano-3,3-diphenylacryloyl)oxy]-2,2-bis[[(2-cyano-3,3-diphenyl-acryloyl)oxy]methyl]propane (UVINULTM 3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenyl-acryloyl)oxy]methyl]propane; 2,2'-methylen-bis-(6-{2H-benzotriazol-2-yl}-4-{1,1,3,3-tetramethylbutyl}-phenol) (LA-31 from Adeka Argus); or 2-(4,6-diphenyl-1,3,5-triazin-2-yl)-5-hexyloxyphenol (Tinuvin 1577 from Ciba Geigy). For articles formed by extrusion, UVINUL 3030, commercially available from BASF, is specifically useful due to its low volatility.

The one or more UV absorbing additive can be used in the carbonate polymer composition independently in amounts of equal to or less than 15 weight percent, in some cases equal to or less than 10 weight percent, in some cases equal to or less than 7.5 weight percent, and in other cases equal to or less than 5 weight percent based on the total weight of the carbonate polymer composition for a specific layer. The one or more UV absorbing additive can be used in the carbonate polymer composition independently in amounts of equal to or greater than 0.01 weight percent, in some cases equal to or greater than 0.1 weight percent, in some cases equal to or greater than 0.5 weight percent, in some cases equal to or greater than 1 and in other cases equal to or greater than 2 weight percent based on the total weight of the carbonate polymer composition for a specific layer.

### Thermal Stabilizer

The composition can contain one or more thermal stabilizers to compensate for the increase in temperature brought on by the interaction of the IR light with the inorganic infrared shielding additives. Further, the addition of thermal stabilizers protects the material during processing operations such as melt blending. In general, an article comprising thermoplastic polymer containing the inorganic infrared shielding additives may experience an increase in temperature of up to about 20 °C, upon exposure to light. The addition of thermal stabilizers to the composition improves the long term aging characteristics and increases the life cycle of the article.

In another embodiment thermal stabilizers may be optionally added to the composition to prevent degradation of the organic polymer during processing and to improve heat stability of the article. Suitable thermal stabilizers include phosphites, phosphonites, phosphines, hindered amines, hydroxylamines, phenols, acryloyl modified phenols, hydroperoxide decomposers, benzofuranone derivatives, or the like, or combinations comprising at least one of the foregoing thermal stabilizers. Examples include, but are not limited to, phosphites such as tris(nonyl phenyl) phosphite, tris(2,4-di-t-butylphenyl) phosphite, bis(2,4-di-t-butylphenyl) pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)]methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; tetrakis(2,4-di-tert-butylphenyl) 4,4'-biphenylenediphosphonite (IRGAPHOSTM PEPQ); amides of beta-(3,5-di-tert-butyl-4-hydroxyphenyl)-propionic acid or the like, or combinations comprising at least one of the foregoing antioxidants. Suitable thermal stabilizers that are commercially available are IRGAPHOS 168, DOVERPHOSTM S-9228, ULTRANOXTM 641, or the like. If desirable, an optional co-stabilizer such as a aliphatic epoxy or a hindered phenol antioxidant such as IRGANOXTM 1076, IRGANOX 1010, both from Ciba Specialty chemicals may also be added to improve thermal stability of the composition. Desirable thermal stabilizers are phosphites.

The one or more thermal stabilizers can be used in the carbonate polymer composition in amounts of equal to or less than 5 weight percent, in some cases equal to or less than 3 weight percent, in some cases equal to or less than 1 weight percent, in some cases equal to or less than 1 weight percent, in some cases equal to or less than 0.5 weight percent, and in other cases equal to or less than 0.1 weight percent based on the total weight of the carbonate polymer composition. The one or more thermal stabilizers can be used in the carbonate polymer composition in amounts of equal to or greater than 0.001 weight percent, in some cases equal to or greater than 0.002 weight percent, in some cases equal to or greater than 0.005 weight percent, and in other cases equal to or greater than 0.01 weight percent based on the total weight of the carbonate polymer composition for a specific layer.

### Antioxidant

Examples of antioxidant that may be used in the present invention include hindered phenol-based antioxidants. Specific examples of the hindered phenol-based antioxidants may include pentaerythirtyl-tetrakis[3-(3,5-di-t-butyl-4-hydroxyphenyl)propionate], octadecyl-3-(3,5-di-t-butyl-4-hydroxyphenyl)propionate, thiodiethylenebis[3-(3,5-di-t-butyl-4-hydroxphenyl)propionate], N,N'-hexane-1,6-di-yl-bis[3-(3,5-di-t-butyl-4-hydroxphenylpropionamide), 2,4-dimethyl-6-(1-methylpentadecyl)phenol, diethyl[[3,5-bis(1,1-dimethylethyl)-4-hydroxyphenyl]methyl] phosphate, 3, 3', 3", 5,5', 5"-hexa-t-butyl-a,a',a"-(mesitylene-2,4,6-tri-yl) tri-p-cresol, 4,6-bis(octylthiomethyl)-o-cresol, ethylene-bis(ox-yethylene)bis[3-(5-t-butyl-4-hydroxy-m-tolyl)propionate], hexamethylene-bis[3-(3,5-di-t-butyl-4-hydroxyphenyl)propionate], 1,3,5-tris(3,5-di-t-butyl-4-dyroxybenzyl)-1,3,5-trazine-2,4,6(1H,3H,5H)-tri-one,2,6-di-t-butyl-4-(4,6-bis(octylthio)-1,3,5-triazine-2-yl-amino)phenol, or the like. Of these, pentaerythrityl-tetrakis[3-(3,5-di-t-butyl-4-hydroxyphenyl)propionate] and octadecyl-3-(3,5-di-t-butyl-4-hydroxyphenyl)propionate are especially preferred. These two phenol-based antioxidants are available as trade names of "IRGANOX 1010" and "IRGANOX 1076" respectively produced by Ciba Speciality Chemicals Corp.

One or more antioxidants can be used in used in the present invention. The amount of phenol-based antioxidant that can be used includes amounts of equal to or less than 2 weight percent, in some cases equal to or less than 1 weight percent, in some cases equal to or less than 1 weight percent, in some cases equal to or less than 0.5 weight percent, in some cases equal to or less than 0.4 weight percent, and in other cases equal to or less than 0.2 weight percent based on the total weight of the carbonate polymer composition. The amount of phenol-based antioxidant can be used in amounts of equal to or greater than 0.01 weight percent, in some cases equal to or greater than 0.05 weight percent, and in other cases equal to or greater than 0.1 weight percent based on the total weight of the carbonate polymer composition for a specific layer. When the content of the phenol-based antioxidant is less than 0.1 weight percent, the effect of antioxidant may be insufficient and when the content of the phenol-based antioxidant is more than 2 weight percent, the effect of antioxidant may be saturated.

### Antistatic

The term "antistatic agent" refers to monomeric, oligomeric, or polymeric materials that can be processed into polymer resins and/or sprayed onto materials or articles to improve conductive properties and overall physical performance. Examples of monomeric antistatic agents include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents include certain polyesteramides polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example PelestatTM 6321 (Sanyo) or PebaxTM MH1657 (Atofina), IrgastatTM P18 and P22 (Ciba-Geigy). Other polymeric materials that may be used as antistatic agents are inherently conducting polymers such as polyaniline (commercially available as PANIPOLTM EB from Panipol), polypyrrole and polythiophene (commercially available from Bayer), which retain some of their intrinsic conductivity after melt processing at elevated temperatures. In one embodiment, carbon fibers, carbon nanofibers, carbon nanotubes, carbon black, or any combination of the foregoing may be used in a polymeric resin containing chemical antistatic agents to render the composition electrostatically dissipative.

Antistatic agents that are suitable for use herein include onium salts of alkyl sulfonates, particularly alkylated and arylated onium salts of perfluorinated alkyl sulfonates. Exemplary onium salts are phosphonium, ammonium, sulfonium, imidazolinium, pyridinium or tropilium salt. Suitable examples are the alkylated ammonium and phosphonium salts of perfluorinated alkyl sulfonates, and particularly alkylated phosphonium sulfonates. Specifically useful phosphonium sulfonates include fluorinated phosphonium sulfonates which can comprise a fluorocarbon containing an organic sulfonate anion, and an organic phosphonium cation. Suitable examples of such organic sulfonate anions include, but are not limited to, perfluoro methane sulfonate, perfluoro butane sulfonate, perfluoro hexane sulfonate, perfluoro heptane sulfonate, perfluoro octane sulfonate, combinations comprising one or more of these, and the like. Suitable examples of the aforementioned phosphonium cation include, but are not limited to, aliphatic phosphonium such as tetramethyl phosphonium, tetraethyl phosphonium, tetrabutyl phosphonium, triethylmethyl phosphonium, tributylmethyl phosphonium, tributylethyl phosphonium, trioctylmethyl phosphonium, trimethylbutyl phosphonium trimethyloctyl phosphonium, trimethyllauryl phosphonium, trimethylstearyl phosphonium, triethyloctyl phosphonium and aromatic phosphoniums such as tetraphenyl phosphonium, triphenylmethyl phosphonium, triphenylbenzyl phosphonium, tributylbenzyl phosphonium, combinations comprising one or more of the foregoing, and the like. Suitable examples of the aforementioned ammonium cation include, but are not limited to, aliphatic ammonium such as tetramethyl ammonium, tetraethyl ammonium, tetrabutyl ammonium, triethylmethyl ammonium, tributylmethyl ammonium, tributylethyl ammonium, trioctylmethyl ammonium, trimethylbutyl ammonium trimethyloctyl ammonium, trimethyllauryl ammonium, trimethylstearyl ammonium, triethyloctyl ammonium and aromatic ammoniums such as tetraphenyl ammonium, triphenylmethyl ammonium, triphenylbenzyl ammonium, tributylbenzyl ammonium, combinations comprising one or more of the foregoing, and the like. A combination comprising at least one of the foregoing antistatic agents may also be used.

One or more antistatic agents can be used independently in amounts of 0.0001 to 5.0 weight percent, based on the total weight of the carbonate polymer composition for a specific layer.

### Mold Release

Examples of mold release agents useful in the present invention may include at least one selected from aliphatic carboxylic acids, esters of aliphatic carboxylic acid and aliphatic alcohol, aliphatic hydrocarbon compounds having a number-average molecular weight of 200 to 15000 and polysiloxane-based silicone oils.

Examples of the above aliphatic carboxylic acids may include saturated or unsaturated aliphatic monocarboxylic acids, dicarboxylic acids and tricarboxylic acids. Here, the aliphatic carboxylic acids also involve alicyclic carboxylic acids. Of these aliphatic carboxylic acids, preferred are C₆ to C₃₆ mono- or di-carboxylic acids, and more preferred are C₆ to C₃₆ aliphatic saturated monocarboxylic acids. Specific examples of such aliphatic carboxylic acids may include palmitic acid, stearic acid, caproic acid, capric acid, lauric acid, arachic acid, behenic acid, lignoceric acid, cerotic acid, melissic acid, tetraiacontanioc acid, montanic acid, adipic acid and azelic acid.

As the aliphatic carboxylic acid components constituting the ester of aliphatic carboxylic acid and aliphatic alcohol, there may be used the same aliphatic carboxylic acids as described above. Also, as the aliphatic alcohol components constituting the aliphatic carboxylic acid esters, there may be used saturated or unsaturated monohydric alcohols, saturated or unsaturated polyhydric alcohols, etc. These alcohols may have substitute groups such as a fluorine atom, an aryl group or the like. Of these alcohols, preferred are saturated monohydric or polyhydric alcohols having not more than 30 carbon atoms, and more preferred are polyhydric alcohols or aliphatic saturated monohydric alcohols having not more than 30 carbon atoms. Here, the aliphatic alcohols also involve alicyclic alcohols. Specific examples of the alcohols may include octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylol propane and dipentaerythritol. These ester of aliphatic carboxylic acid and aliphatic alcohol may contain aliphatic carboxylic acids and/or alcohols as impurities, or may be in the form of a mixture of a plurality of compounds.

Specific examples of the ester of aliphatic carboxylic acid and aliphatic alcohol may include bees wax (mixtures containing myricyl palmitate as a main component), stearyl stearate, behenyl behenate, stearyl behenate, glycerol monopalmitate, glycerol monostearate, glycerol distearate, glycerol tristearate, penaerythritol monopalmitate, pentaerythritol monostearate, pentaerythritol distearate, pentaerythritol tristearate and pentaerythritol tetrastearate or the like.

As the aliphatic hydrocarbon compounds having a number-average molecular weight of 200 to 15000, there are exemplified liquid paraffins, paraffin waxes, microwaxes, polyethylene waxes, Fischer-Tropsch waxes, α-olefin oligomers having C₆ to C₁₂ or the like. Here, the aliphatic hydrocarbon compounds also involve alicyclic hydrocarbon compounds also involve alicyclic hydrocarbon compounds. Further, these hydrocarbon compounds may be partially oxidized. Of these, paraffin waxes, polyethylene waxes and partially oxidized products of polyethylene wax are preferred, and paraffin waxes and polyethylene waxes are more preferred. The number-average molecular weight of aliphatic hydrocarbon compounds is preferably 200 to 5000. These aliphatic hydrocarbon compounds may be used singly or as a mixture of two or more compounds having various components and molecular weights as long as the main constitution has the properties within the above range.

As the polysiloxane-based silicone oils, there are exemplified dimethyl silicone oils, phenylmethyl silicone oils, diphenyl silicone oils, fluorinated alkyl silicone oils or the like. These may be used singly or as a mixture of two or more.

The amount of mold release agent can be used in the composition in amounts of equal to or less than 2 weight percent, in some cases equal to or less than 1 weight percent, in some cases equal to or less than 1 weight percent, in some cases equal to or less than 0.5 weight percent, in some cases equal to or less than 0.4 weight percent, and in other cases equal to or less than 0.2 weight percent based on the total weight of the carbonate polymer composition for a specific layer. The amount of mold release agent can be used in the composition in amounts of equal to or greater than 0.01 weight percent, in some cases equal to or greater than 0.05 weight percent, and in other cases equal to or greater than 0.1 weight percent based on the total weight of the carbonate polymer composition for a specific layer. These mold release agents may be used singly or as a mixture of two or more.

### Dyes

Polycarbonate compositions in optical uses typically are color-corrected, i.e. they contain dyes to adjust the color in order to compensate for the any slightly color shade of the polycarbonate, typically yellow.

Dyes that can be employed for adjustment of the color in polycarbonate are in principle all dyes which have a sufficiently high heat stability up to at least 300 °C, so that they are not decomposed at the processing temperatures of the polycarbonate. Furthermore, the dyes should not have basic functionalities, which lead to a degradation of the polymer chain of the polycarbonate.

Suitable dyes include dyes of the following classes: anthanthrones, anthraquinones, benzimidazoles, diketopyrrolopyrroles, isoindolinols, perinones, perylenes, phthalocyanines, quinacridones and quinophthalones.

Dyes suitable for use in the present invention may be organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly(C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene; chrysene; rubrene; coronene, or the like, or combinations comprising at least one of the foregoing dyes.

MACROLEXTM dyes from Lanxess can be very suitably employed for coloring polycarbonate. A large number of various dyes are available from this product line, e.g. the methine dyes MACROLEX Yellow 6G Gran, the azo dyes MACROLEX Yellow 4G, the pyrazolone dyes MACROLEX Yellow 3G Gran, the quinophthalone dyes MACROLEX Yellow G Gran, the perinone dyes MACROLEX Orange 3G Gran, the methine dyes MACROLEX Orange R Gran, the perinone dyes MACROLEX Red E2G Gran and MACROLEX Red EG Gran and the anthraquinone dyes MACROLEX Red G Gran, MACROLEX Red 5B Gran, MACROLEX Red Violet R Gran, MACROLEX Violet B Gran, MACROLEX Blue 3R Gran, MACROLEX Blue 2B Gran, MACROLEX Green 5B Gran and MACROLEX Green G Gran.

WO 99/13007 moreover describes e.g. indigo derivatives which are suitable for dyeing polycarbonate.

DE 19747395 describes e.g. benzo(de)isoquinolinobenzo(1,2-d:4,5-d')diimidazole-2,12-diones which can be employed as polymer-soluble dyess, inter alia in polycarbonate.

Suitable dyes are violet and/or blue in color or produce violet and/or blue color in the carbonate polymer compositions of the invention, for example Macrolex Violet 3R Gran (which is a violet dye and sometimes called Solvent Violet 36) and 1,4-bis[(2,6-diethyl-4-methylphenyl)amino]- 9,10-anthracenedione, available as Macrolex Blue RR Gran (which is a blue dye and is sometimes called Solvent Blue 97) which are anthraquinone dyes. Such violet and blue dyes may be used in combination in a ratio of from 25:75 to 75:25.

One or more dye can be used independently or in combination wherein each dye is independently present in an amount equal to or greater than 1 ppm, in some cases equal to or greater than 10 ppm, in some cases equal to or greater than 25 ppm, and in other cases equal to or greater than 50 ppm based on the total weight of the carbonate polymer composition for a specific layer. One or more dye can be used independently or in combination wherein each dye is independently present in an amount equal to or less than 10,000 ppm, in some cases equal to or less than 5,000 ppm, in some cases equal to or less than 1,000 ppm, in some cases equal to or less than 750 ppm, and in other cases equal to or less than 500 ppm based on the total weight of the carbonate polymer composition for a specific layer.

### Other Additives

In addition to the additives noted above, other additives typically used in transparent polycarbonate compositions can also be employed. For example, flame retardants, optical brighteners, anti-blocking agents, lubricants, anti-fog agents, natural oils, synthetic oils, waxes, or the like. For example, flame retardant additives that leave the composition transparent can be used in one or more layer composition. Preferred flame retardant additives are silicone based flame retardants, phosphorous based flame retardants, brominated flame retardants such as brominated bis-A oligomers (e.g., BC-52 available from CHEMTURA) at levels up to 20 weight percent, C4 charring salts (potassium perfluorobutane sulphonate, available form Lanxess) up to 1500 ppm, KSS (diphenyl sulfone-3-sulfonic acid, potassium salt, available from Seal Sands) up to 1.0 weight percent, alone or in combinations. Another additive that may be used when a UV stabilizer is present is an optical brightener. For example, 2,2'-(2,5-Thiophenediyl)bis[5-tert-butylbenzoxazole] available as UVITEXTM OB from CIBA, 2,2'-(1,2-ethenediyldi-4,1-phenylene) bisbenzoxazole available as EASTOBRITETM OB-1 from EASTMAN, 2-[4-[4-(2-Benzoxazolyl)styryl]phenyl]-5-methylbenzoxazole, available as HOSTALUX KS-N from CLARIANT. Optical brighteners are typically employed in amounts from 1 to 10000 ppm, in some cases from 2 to 1000 ppm, and in other cases from 5 to 500 ppm.

The multi-walled sheet structures of the present invention are prepared by the extrusion through profile dies. Corrugated surfaces may be produced on multi-walled sheet structures of the present invention during the extrusion process for example by using a corrugated calibrator unit or by post embossing the sheet by using an embossing roller. Alternatively, a corrugated film may be laminated or coextruded onto one or more surfaces of one or more walls of a multi-walled sheet.

For example, the one or more additives (i.e., IR absorbing additive, UV absorbing additive, mold release, antioxidant, thermal stabilizer, dye, other additives, etc.) may be mixed in the polymerization stage of the carbonate polymer or at the end of the polymerization of the carbonate polymer, or the additives may be mixed in a kneading step under melting conditions of the carbonate polymer, or the additives may be mixed (with a mixer or other means) which is sometimes referred to as dry blended (in either solid or liquid form depending on the particular additive) with the solid state carbonate polymer (usually in the form of powder, pellets, or flake), the mixture melted, and kneaded by use of an extruder (single and twin screw), Buss-kneaders, helicones, WARING BLENDER™, HENSCHEL™ mixer, BANBURY™ mixer, roll mill, or the like and either converted directly into an article, e.g., a (multilayer) extruded sheet, a (multilayer) extruded structural sheet, or comminuted to pellets and subsequently converted into an article, e.g., a (multilayer) extruded sheet.

Alternatively, the additives for each carbonate polymer layer composition may be compounded into a masterbatch. A masterbatch can be prepared for use with a carbonate base polymer to prepare the multi-layer structure. As used herein, the term "masterbatch" refers to a dispersion of particles in a carrier resin, and typically is in the form of a pellet or bead formed using a mixing process such as a compounding/extrusion process. Preparing the masterbatch includes melt combining a mixture or dry blend comprising a carrier resin and one or more desired additional components such as, for example, the IR absorbing additive, the UV absorbing additive, antioxidant, mold release, dyes, thermal stabilizer and the like. In one embodiment, the carrier resin is a polycarbonate resin. The masterbatch can be melt combined with a carbonate base polymer and other additives to form the carbonate polymer layer composition. In one embodiment, the base polymer is a polycarbonate resin. In another embodiment, the base polymer is the same as the carrier resin used to prepare the masterbatch. The masterbatch can be combined with the base polymer as described above using a mixer, and extruded. In one embodiment, the masterbatch and base polymer are combined in the hopper at the feedthroat of an extruder. In another embodiment, the base polymer is added to the hopper at the feedthroat of the extruder, and the masterbatch is added to a downstream feedport of the extruder.

One process for producing the multi-layer sheet structure from a carbonate polymer layer composition is to independently make a mixture or dry blend of the carbonate polymer and the desired additives using carbonate polymer pellets and the solid/liquid state form of the additive(s) then co-extruding the multiple layer compositions into a multilayer article, such as a multilayer sheet. These mixtures or dry blends may be made and isolated as a physical melt blended mixture of pellets/additives prior to co-extrusion or the mixture may be made *in situ* and not isolated, for example by metering the components into a feed hopper at the throat of an extruder (via a dosing machine or feeder) and, without isolating the mixture, co-extruding the mixture directly into a multilayer article.

Multilayered films, multilayered sheets, or a combination of one or more film with one or more sheet may generally be produced by extrusion followed by laminating the films or sheets in a roll mill or a roll stack (this if for solid film/sheet; for structural sheet, extrusion is followed by calibration through opposite pairs of calibration plates). The extrusion for the identified layers of the multilayered film or multilayered sheet may be performed in a single screw extruder or in a twin screw extruder. It is desirable to extrude the layers in a single or twin screw extruder and to laminate the layers in a roll mill. It is more desirable to co-extrude the layers in a single screw extruder or twin screw extruder. Co-extrusion equipment can simultaneously co-extrude multilayered articles having at least 2, 3, 4, 5, 6, 7, 8, 9, 10, or more layers. Alternatively, a multilayered article having two or more layers may be co-extruded and one or more layer further laminated to said multilayered article, for example in a roll mill. The roll mill may be either a two roll, three roll mill, or four roll mill, as is desired. The opposite pairs of calibration plates can consist out of a single pair, a double pair or a triple pair. Where desired, the layers can be co-extruded using single screw extruders for manufacturing of the multilayered film or sheet.

In one method to produce the multilayered article of the present invention, the layers of the multilayered articles are co-extruded (i.e., prepared by multilayer coextrusion). In one embodiment, in one manner of co-extruding of the multilayered sheet, the melt streams (extrudates) from the various extruders are fed into a feed block die where the various melt streams are combined before entering the die. In another embodiment, the melt streams from the various extruders are fed into a multi-manifold internal combining die. The different melt streams enter the die separately and join just inside the final die orifice. In yet another embodiment, the melt streams from the various extruders are fed into a multi-manifold external combining die. The external combining dies have completely separate manifolds for the different melt streams as well as distinct orifices through which the streams leave the die separately, joining just beyond the die exit. The layers are combined while still molten and just downstream of the die. An exemplary die used in the production of the multilayered sheet is a feed block die. In an exemplary embodiment, the extruders used for the co-extrusion of the respective layers of the multilayer sheet are single screw extruders respectively. The co-extruded sheet may optionally be calendared in a roll mill if desired.

In the extrusion methods described above, the line speed of the process should be equal to or greater than 0.5 m/min, in some cases greater than 1 m/min, in some cases greater than 2 m/min, in some cases greater than 2.5 m/min. The line speed should be equal to or less than 5 m/min, in some cases less than 4 m/min, in some cases less than 3 m/min.

In the extrusion methods described above the temperature of the die should be equal of greater than 245 °C, in some cases greater than 255 °C, in some cases greater than 265 °C. The temperature in the die should be equal or lower than 300 °C, in some cases less than 290°C, in some cases less than 280°C.

### Examples

A polycarbonate designated as XZR-993was prepared according to the present invention using 0.64 wt% THPE to provide a polycarbonate having a molecular weight of 37,000, a melt viscosity of 14,800 Pa-s at 260°C, a shear rate of 0.1 s⁻¹, and a melt viscosity ratio at 260°C of 6.4. The melt viscosity ratio of the polycarbonate XZR- 993 was compared to the following commercially available polycarbonates, which are not part of the present invention. The results are shown in Table 1 and depicted in the graph in FIG. 3.

**Table 1**

| Polycarbonate | Melt Viscosity Ratio |
|---|---|
| XZR-993 | 6.4 |
| Lexan ML3324 | 3.7 |
| Makrolon 1143 | 4.1 |
| Calibre 603-3 | 3.7 |

The suitability of the XZR-993 described above for making a multi wall sheet was investigated. The XZR-993 was extruded on a 150 mm Omipa extruder with Bexsol die and calibrator plates using a melt temperature of 260°C at a line speed of 0.9 m/min where the die produced a ten wall sheet with vertical ribs that had a total thickness of 55 mm and an area weight of 5 kg/m². The resulting product did not exhibit any sagging, the ribs were vertical (i.e., straight), and the sheet structure was symmetrical.

A mixture of two commercially available polycarbonates, 50% Calibre 603-3 and 503-5 was prepared using 0.2 wt% THPE to provide a polycarbonate having a molecular weight of 31,500, a melt viscosity of 4,800 Pa-s at 260°C, a shear rate of 0.1 s⁻¹, and a melt viscosity ratio of 2.5. This polycarbonate was extruded under the same conditions as the XZR-993, described above. This polycarbonate, however, completely collapsed and no viable sheet structure was produced.

A commercially available polycarbonate, Calibre 603-3 was produced with 0.4 wt% THPE, a molecular weight of 33,500, a melt viscosity of 6,500 Pa•s at 260°C a shear rate of 0.1 s⁻¹, and a melt viscosity ratio of 3.7. This polycarbonate was extruded under the same conditions as the XZR-993, described above. The 603-3 exhibited sagging of the sheet structure, ribs that were not vertical, and diamond shaped walls such that the sheet structure was not symmetrical. This sheet structure was not suitable for commercial use.

## Claims

1. An extruded thermoplastic aromatic polycarbonate and/or aromatic polyester carbonate multi-walled sheet structure comprising:
a. at least two generally parallel spaced apart walls; and
b. a plurality of ribs extending the length of the sheet in a direction of extrusion and separating adjacent walls;
wherein the sheet has a total thickness greater than 40 mm and the polycarbonate has:
(i) a melt viscosity ratio greater than 4.5 measured at 260°C, wherein the melt viscosity ratio is a ratio of the viscosity at a shear rate of 0.1 s⁻¹ to the viscosity at a shear rate of 100 s⁻¹;
(ii) a mean weight average molecular weight of from 35,000 to 40,000 as measured using gel permeation chromatography; and
(iii) a branching agent content of from 0.6 to 0.7 wt.%.

2. A structure according to Claim 1, wherein the polycarbonate has a melt viscosity greater than 10,000 Pas at a shear rate of 0.1 s⁻¹ and at 260°C.

3. A structure according to Claim 1, comprising at least seven walls.

4. A structure according to Claim 3, comprising ten or more walls.

5. A method of making a multi-walled structure comprising:
(a) preparing a thermoplastic aromatic polycarbonate and/or aromatic polyester carbonate having:
(i) a melt viscosity ratio greater than 4.5 measured at 260°C, wherein the melt viscosity ratio is a ratio of the viscosity at a shear rate of 0.1 s⁻¹ to the viscosity at a shear rate of 100 s⁻¹;
(ii) a mean weight average molecular weight of from 35,000 to 40,000 as measured using gel permeation chromatography; and
(iii) a branching agent content of from 0.6 to 0.7 wt.%; and
(b) extruding the polycarbonate using a die whose temperature is in the range 245-300°C and a line speed greater than 0.8 mm/min to form a sheet having at least two generally parallel spaced apart walls separated from one another by ribs extending the length of the sheet in the direction of extrusion.

6. A method according to Claim 5, wherein the polycarbonate has a viscosity greater than 10,000 Pas at a shear rate of 0.1 s⁻¹ and at 260°C.

7. A method according to Claim 5, wherein the sheet has at least seven walls.

8. A method according to Claim 7, wherein the sheet has ten or more walls.

9. A method according to Claim 8, wherein the sheet has a total thickness of 40 mm or greater.

## Patentansprüche

1. Mehrwandige extrudierte thermoplastische aromatische Polycarbonat- und/oder aromatische Polyestercarbonat-Plattenstruktur, umfassend:
a. zumindest zwei im Allgemeinen parallele voneinander beabstandete Wände und
b. eine Vielzahl von Rippen, die die Platte in einer Extrusionsrichtung verlängern und benachbarte Wände voneinander trennen,
wobei die Platte eine Gesamtdicke von größer als 40 mm aufweist und das Polycarbonat aufweist:
(i) ein Schmelzviskositätsverhältnis von größer als 4,5, gemessen bei 260°C, wobei das Schmelzviskositätsverhältnis ein Verhältnis der Viskosität bei einer Schergeschwindigkeit von 0,1 s⁻¹ zu der Viskosität bei einer Schergeschwindigkeit von 100 s⁻¹ ist,
(ii) ein mittleres gewichtsgemitteltes Molekulargewicht von 35.000 bis 40.000, gemessen unter Verwendung von Gelpermeationschromatographie, und
(iii) einen Verzweigungsmittelgehalt von 0,6 bis 0,7 Gew.-%.

2. Struktur gemäß Anspruch 1, wobei das Polycarbonat eine Schmelzviskosität von 10.000 Pas bei einer Schergeschwindigkeit von 0,1 s⁻¹ und bei 260°C aufweist.

3. Struktur gemäß Anspruch 1, umfassend mindestens sieben Wände.

4. Struktur gemäß Anspruch 3, umfassend zehn oder mehr Wände.

5. Verfahren zur Herstellung einer mehrwandigen Struktur, umfassend:
(a) Herstellen eines thermoplastischen aromatischen Polycarbonats und/oder aromatischen Polyestercarbonats mit:
(i) einem Schmelzviskositätsverhältnis von größer als 4,5, gemessen bei 260°C, wobei das Schmelzviskositätsverhältnis ein Verhältnis der Viskosität bei einer Schergeschwindigkeit von 0,1 s⁻¹ zu der Viskosität bei einer Schergeschwindigkeit von 100 s⁻¹ ist,
(ii) einem mittleren gewichtsgemittelten Molekulargewicht von 35.000 bis 40.000, gemessen unter Verwendung von Gelpermeationschromatographie, und
(iii) einem Verzweigungsmittelgehalt von 0,6 bis 0,7 Gew.-%, und
(b) Extrudieren des Polycarbonats unter Verwendung einer Düse, deren Temperatur im Bereich von 245 bis 300°C liegt, und einer Liniengeschwindigkeit von größer als 0,8 mm/min, um eine Platte mit mindestens zwei im Allgemeinen parallelen voneinander beabstandeten Wänden zu bilden, die voneinander durch Rippen getrennt sind, die die Platte in Extrusionsrichtung verlängern.

6. Verfahren gemäß Anspruch 5, worin das Polycarbonat eine Viskosität von größer als 10.000 Pas bei einer Schergeschwindigkeit von 0,1 s⁻¹ und bei 260°C aufweist.

7. Verfahren gemäß Anspruch 5, wobei die Platte mindestens sieben Wände aufweist.

8. Verfahren gemäß Anspruch 7, wobei die Platte zehn oder mehr Wände aufweist.

9. Verfahren gemäß Anspruch 8, wobei die Platte eine Gesamtdicke von 40 mm oder größer aufweist.

## Revendications

1. Structure de feuille à parois multiples en polycarbonate aromatique thermoplastique et/ou carbonate de polyester aromatique extrudé comprenant :
a. au moins deux parois espacées globalement parallèles ; et
b. une pluralité de nervures s'étendant le long de la feuille dans une direction d'extrusion et séparant les parois adjacentes ;
dans laquelle la feuille a une épaisseur totale supérieure à 40mm et le polycarbonate a :
(i) un rapport de viscosité à l'état fondu supérieur à 4,5 mesuré à 260 °C, dans laquelle le rapport de viscosité à l'état fondu est un rapport de la viscosité à un taux de cisaillement de 0,1 s⁻¹ à la viscosité à un taux de cisaillement de 100 s⁻¹ ;
(ii) un poids moléculaire moyen en poids moyen de 35 000 à 40 000 tel que mesuré en utilisant une chromatographie d'exclusion diffusion ; et
(iii) une teneur en agent de ramification de 0,6 à 0,7 % en poids.

2. Structure selon la revendication 1, dans laquelle le polycarbonate a une viscosité à l'état fondu supérieure à 10 000 Pas à un taux de cisaillement de 0,1 s⁻¹ et à 260 °C.

3. Structure selon la revendication 1, comprenant au moins sept parois.

4. Structure selon la revendication 3, comprenant dix parois ou plus.

5. Procédé de fabrication d'une structure à parois multiples comprenant :
(a) la préparation d'un polycarbonate aromatique thermoplastique et/ou d'un carbonate de polyester aromatique ayant :
(i) un rapport de viscosité à l'état fondu supérieur à 4,5 mesuré à 260 °C, dans lequel le rapport de viscosité à l'état fondu est un rapport de la viscosité à un taux de cisaillement de 0,1 s⁻¹ à la viscosité à un taux de cisaillement de 100 s⁻¹ ;
(ii) un poids moléculaire moyen en poids moyen de 35 000 à 40 000 tel que mesuré en utilisant une chromatographie d'exclusion diffusion ; et
(iii) une teneur en agent de ramification de 0,6 à 0,7 % en poids ; et
(b) l'extrusion du polycarbonate en utilisant une filière dont la température est dans la plage 245-300 °C et une vitesse de ligne supérieure à 0,8 mm/min pour former une feuille ayant au moins deux parois espacées globalement parallèles séparées les unes des autres par des nervures s'étendant le long de la feuille dans la direction d'extrusion.

6. Procédé selon la revendication 5, dans lequel le polycarbonate a une viscosité supérieure à 10 000 Pas à un taux de cisaillement de 0,1 s⁻¹ et à 260 °C.

7. Procédé selon la revendication 5, dans lequel la feuille a au moins sept parois.

8. Procédé selon la revendication 7, dans lequel la feuille a dix parois ou plus.

9. Procédé selon la revendication 8, dans lequel la feuille a une épaisseur totale de 40 mm ou supérieure.
